# EUROPEAN PATENT APPLICATION

(11) **EP 4 482 020 A1**
(43) Date of publication of application: **25.12.2024**
(21) Application number: 23182074.7
(22) Date of filing: 28.06.2023
(51) Int. Cl.: H02P 9/04

(54) **OPERATING A WIND TURBINE GENERATOR RELATING TO A MOTORING MODE**

(30) Priority: 22.06.2023 US 202363509599 P
(71) Applicant: Siemens Gamesa Renewable Energy A/S, 7330 Brande (DK)
(72) Inventor: Alberts, Johannes Gerhardes Wardjan, 2660 Brøndby Strand (DK); Dunne, Fiona, Lynchburg 24503 (US); Frouzakis, Nikolaos, 2450 Copenhagen (DK); Hoegh, Gustav, 7100 Vejle (DK); Jensen, Dennis Stachniuk, 7330 Brande (DK)
(74) Representative: SGRE-Association

(57) **Abstract**

It is described a method of operating a generator system (101) coupled to a rotor (109), in particular of a wind turbine (100), in relation to a motoring mode, comprising: monitoring a value of at least one, in particular electrical and/or mechanical, operational parameter (104) of the generator system (101) during the motoring mode; ramping down a value of a quantity (113) indicating a magnitude of a torque (T) to be generated by the generator system (101), if the operational parameter value indicates a critical situation, the ramping down value of quantity being supplied to the generator system (101) for controlling the generator system; then stopping the generator system (101) such that no torque (T) is generated by the generator system, the stopping in particular comprising stopping a converter and/or stopping dynamic control and/or disconnecting the generator system from a power supply.

## Description

### Field of invention

The present invention relates to a method and to a corresponding arrangement of operating a generator system coupled to a rotor, in particular of a wind turbine, in relation to a motoring mode and further relates to a wind turbine comprising the generator system.

### Art Background

When positioning the rotor of a wind turbine with the help of the converter, i.e., when the generator is functioning as a motor, the positioning may happen with the help of the electrical system. In case that the control of the rotor position is out of control, damage can be done to the blade(s) or other components of the wind turbine.

Conventionally, using the electrical system to position the rotor for blade installation has not applied. As a consequence, also no protection measures have been applied conventionally. If the wind turbine components or in particular rotor blades are not protected, their respective design loads may be exceeded and damage may occur requiring repair or even replacement of the rotor blades. Conventionally, the rotor blades have been strengthened which, however, adds weight to the rotor blade. As a consequence, also other wind turbine components like the rotor blade bearings, the hub, the bed frame and the tower may have been required to be strengthened increasing their respective weight having a negative impact on the efficiency.

Thus, there may be a need for a method and a corresponding arrangement of operating a generator system in relation to a motoring mode, wherein wind turbine components may reliably be protected from damage and enabling a smooth and safe operation. There may further be a need for a wind turbine being capable to operate the generator system in a monitoring mode in a reliable and safe manner.

### Summary of the Invention

This need may be met by the subject matter according to the independent claims. Advantageous embodiments of the present invention are described by the dependent claims.

According to an embodiment of the present invention it is provided a method of operating a generator system coupled to a rotor, in particular of a wind turbine, in relation to a motoring mode, comprising: monitoring a value of at least one, in particular electrical and/or mechanical, operational parameter of the generator system during the motoring mode; ramping down a value of a quantity indicating a magnitude of a torque to be generated by the generator system, if the operational parameter value indicates a critical situation, the ramping down value of quantity being supplied to the generator system for controlling the generator system; then stopping the generator system such that no torque is generated by the generator system, the stopping in particular comprising stopping a converter and/or stopping dynamic control and/or disconnecting the generator system from a power supply.

The method may be implemented in software and/or hardware and may for example be performed by a portion or a module of a wind turbine controller. The method may not only be applied to a wind turbine generator but to any generator or motor system which applies the motor or generator generated torque in order to position (and the hold) the rotor to a particular azimuthal position. Initially during the method, the generator system may be operated in a motoring mode, i.e., in a mode, where the generator system actively generates a mechanical torque acting on the rotor. The monitoring mode may in particular be applied to rotate the rotor (for example with a relatively low rotational speed of for example up to 0.2 rpm), in order to reach a particular predefined azimuthal position. The motoring mode may also involve to then keep or hold the rotor at the predefined azimuthal position.

Moving the rotor to and keeping the rotor at the predetermined azimuthal position may require application of a particular torque. For example, position control, e.g., and/or torque control, may be performed during the motoring mode. The motoring mode may in particular be applied during a maintenance and/or assembly and/or installation procedure of one or more components of the wind turbine. The motoring mode may in particular be applied during (de)mounting one or more rotor blades to the rotor or to the hub of the wind turbine.

The electrical and/or mechanical operational parameter may for example include voltage, current, power, torque as generated or supplied to the generator system. The value may be monitored regarding its magnitude and/or its oscillatory behaviour. The operational parameter may indicate a critical situation when outside of one or more predetermined values or thresholds, in particular for at least a predetermined time interval, wherein the operational parameter value may also be considered after filtering or averaging, as required by the particular application.

When the critical situation is indicated, the method may switch to or apply a torque control for controlling the torque created by the generator system. The quantity indicating the magnitude of the torque may be proportional to the torque or may be proportional to the absolute value of the torque and may for example also be proportional or related to or dependent on the power as supplied to the generator system and/or to the current supplied to the generator system. The generator system may be controlled by the quantity indicating a magnitude of the torque which may assume different variants in different embodiments, such as being the (magnitude or absolute value of the) torque itself, the current and/or the power as supplied to the generator system. The value of the quantity indicating the magnitude of the torque is supplied to the generator system for controlling the generator, such that the generated torque ramps down.

The ramping down may start from a value as generated at the point in time when the critical situation is detected and may then decrease the torque (in magnitude) to for example a non-zero value or to the value of zero torque. Ramping down the torque as generated by the generator system may advantageously protect wind turbine components from damage. Thus, in particular abrupt torque changes are avoided which could lead to mechanical breakage or mechanical damage of for example a wind turbine blade.

When the value of the quantity indicating the magnitude of the torque has been ramped down, the generator system is afterwards stopped such that no torque is generated by the generator system.
The ramping down may be in a manner linear in time or not linear in time. The ramping down may be according to a reference curve defining a profile of the torque to be generated over time. The profile or in general the ramping down may be designed according to the particular application and depending on the constructional details of the wind turbine rotor including one or more blades already mounted

Stopping the generator system may involve one or more steps, including to stop operation of a converter connected to the generator (and included in the generator system) and/or disabling any dynamic control of the generator system and/or also finally stopping any power supply to the generator system. When the method includes a torque ramping down stage, wind turbine components may effectively be protected from damage and a safe operation may be assured.

Which operational parameter is monitored or which group of operational parameters is monitored may depend on the particular application and further may depend on the objective which components are to be protected for which operational procedure during the motoring mode.

According to an embodiment of the present invention, the value of the quantity (e.g., current, power, torque) is decreased from a first value to a second value, wherein the first value is a value generated by the generator system at a detection point in time, when the operational parameter value indicates a critical situation, and the second value is below a torque indicating threshold value, in particular is zero, wherein disconnecting the generator system from the power supply is in particular only performed, if the value of the quantity is at the second value.

During the monitoring mode (used in for example mounting a blade to the rotor or to the hub), the generator may be required to apply a first value of a torque (for example for counteracting any mechanical torque due to gravitation). The ramping down then involves to decrease the magnitude of the torque to be generated from this first value of the torque to a second value which is lower than the first value. Ramping down may therefore avoid for example an overloading situation or a critical oscillatory behaviour or also an overspeed situation. When the stopping of the generator system is only applied, when the value of the quantity is at the second value, a safe operation may be ensured. For example, it may be avoided to suddenly drop the torque to zero from a potentially relatively high value, thereby avoiding very abrupt changes of the torque as generated by the generator system.

According to an embodiment of the present invention, the ramping down is performed within a ramping down time interval ranging from a detection point in time, when the operational parameter value indicates a critical situation, until the value of the quantity is ramped down to the second value, wherein the ramping down time interval is between 100 ms and 300 ms, in particular between 150 ms and 250 ms, in particular 200 ms.

The ramping down time interval may be selected or defined based on the particular application and/or the constructional details of the wind turbine. When the ramping down time interval is between 100 ms and 300 ms, the ramping down may be fast enough to avoid damage which has triggered the monitor, and also slow enough to avoid the impact of the abrupt changes of the torque as generated by the generator system.

According to an embodiment of the present invention, the ramping down is performed in one or more time intervals, at least in one time interval in a linear manner.

The ramping down may be performed according to any curve being curved or having curved sections and/or having one or more linear sections. For example, critical torques may be run through in a fast manner and also the manner of the ramping down may be designed to avoid excitations of any particular oscillations. Thereby, great flexibility is provided allowing the method to be adapted to the particular application.

According to an embodiment of the present invention, the quantity indicating a magnitude of a torque comprises one of: a reference torque for the generator; a reference current for the generator; a reference power for the generator.

Thereby, also flexibility for the control may be increased. The generator system may in particular be controlled via supplying control signals to a converter connected to a generator. Thereby, conventionally applied control methods may be supported, in particular vector control.

According to an embodiment of the present invention, the generator system comprises a generator and a converter connected to each other, the converter in particular comprising an AC/DC portion, a DC-link and a DC/AC portion, wherein disconnecting the generator system from the power supply comprises, in particular by operating one or more breakers: stopping and/or disconnecting the converter from the power supply; and/or stopping and/or disconnecting the converter from the generator.

Stopping the converter may involve to stop supply of control signals to the converter such that in turn the converter cannot control the generator any more so that the generator is stopped Stopping the converter can also be achieved by or include opening the electrical breaker that connects the converter to the generator.

According to an embodiment of the present invention, during the motoring mode, a position or speed control a torque control and/or a current control, in particular using a converter, is performed, and/or wherein the motoring mode is performed during maintenance and/or assembly and/or installation of one or more components of the wind turbine; and/or wherein generator system disconnection is disabled during rotor lock pin handling, in particular rotor lock pin insertion or rotor lock pin removal.

The motoring mode may in particular involve to move or rotate the rotor to a predetermined azimuthal position and/or keeping the generator at this predetermined azimuthal position. Thus, the motoring mode may involve to move or rotate the rotor at very low rotational speed, close to zero rotational speed and also including the rotational speed of zero. When during the method the critical situation is detected, the control is, however, at least for the ramping down stage, switched to or kept at torque control, thereby ensuring a safe operation. When for example maintenance personnel is handling a rotor lock pin, the generator system disconnection may be disabled, in order to protect the maintenance personnel from any damage or injuries.

According to an embodiment of the present invention, the critical situation is indicated, if the operational parameter value and/or a filtered operational parameter value and/or the operational parameter value averaged over a predetermined time span, in particular between 0.5 s and 2 s, in particular 1 s, exceeds or falls below one or more thresholds for one or more time spans. Thereby, great flexibility is provided, allowing to adapt the method to the particular application.

According to an embodiment of the present invention, the power supply comprises at least one of: a local power supply, in particular combustion engine generator; a utility grid or a battery system.

The local power supply may for example include a diesel engine or an electrical accumulator or battery. The local power supply and power from the utility grid may be utilized in combination to supply the power to the generator system.

According to an embodiment of the present invention, the monitored operational parameter comprises at least one of: power consumption of the generator system; current consumption of the generator system; torque generated by the generator system; wherein the operational parameter value indicates in particular a critical situation, if the power consumption and/or current consumption and/or torque generated exceeds in magnitude a predefined profile or predefined value, the predefined profile being in particular dependent on a mass imbalance of the rotor combined with the rotor position and/or the rotational speed, wherein the predefined value is in particular a value expected not to be exceeded for a maintenance operation, in particular mounting or demounting of a rotor blade.

When the power consumption of the generator system is monitored, a failure scenario may be supported in which the electrical system is overloading the rotor to a torque level much higher than the torque needed for position control. In the overload situation, structural damage may occur and thus the electrical system should not be allowed to continue operation. Also, the current consumption of the generator system may be an appropriate operational parameter which may indicate an overloading situation. The same may be holding for monitoring the torque. In this embodiment, the power overload monitor may detect the overloading by looking at the consumed power, [Joren1] or the generated torque or the consumed current, used for positioning control. If the (processed) signal (for example average or filtered monitored signal) is above a predetermined consumption threshold for a short period of time, the electrical system may be disconnected to prevent further damage.

According to an embodiment of the present invention, the monitored operational parameter comprises at least one of: rotational speed of a rotor of the generator system; wherein the operational parameter value indicates in particular a critical situation, if a rotational speed and/or a rotational speed average of an averaging time span, in particular between 0.5 s and 2.0 s, is above a predefined value, in particular 0.2 rpm.

Thereby, a failure scenario wherein the rotor starts spinning at a speed higher than the anticipated speed may be supported. The speed may be higher than a safe speed for operating the generator system in a motoring mode. This may be caused by applying too much torque to the rotor or when all torque is lost and the unbalanced rotor (i.e., one blade or two blades installed on a three-bladed rotor) falls to its equilibrium point or position. For these scenarios, the electrical system should not be allowed to try to control the position of the rotor and it shall wait until the speed has come below a certain threshold, before position control is allowed again. In case of trying to regain control of the rotor position at high rotor speeds, there may be a high chance of blade damage as the electrical system is not designed to do position control at these high speeds.

The purpose of the motoring overspeed monitor may be to disconnect the converter in case of converter instability during a motoring operation, i.e., when the converter is used to rotate the rotor. For example, if the converter drops an unbalanced rotor, this monitor may detect the rotor speed being higher than expected and may avoid a catching attempt that could lead to high loads. For example, the overspeed monitor may measure that the rotor is rotating too fast and disconnects the converter, before the converter tries to apply any torque to oppose the rotor "drop".

The motoring overspeed monitor may compare a one second averaged rotor speed to a certain threshold. If that threshold is exceeded, for a short period of time, an alarm may be set and the converter is disconnected.

According to an embodiment of the present invention, the monitored operational parameter comprises at least one electrical oscillation of power (consumption) and/or electrical oscillation of a DC-link voltage, in particular in a frequency range between 0 Hz to 30 Hz, in particular 0.3 Hz to 20 Hz.

The generator and the converter system are the interface between the mechanical torque applied by the rotor or applied to the rotor and the power supply to the grid. Therefore, it may be important that this system runs stable not to interfere with the power production. However, in case there is an instability caused either by the electrical system or the rotor that the electrical system cannot stabilize, the integrity of the system (rotor, electrical system and grid/other powering source) needs to be ensured.

Feeding through oscillations from the electrical system into the grid can endanger the grid compliance, oscillations in the electrical system can lead to damage on these components, or electrical oscillations fed into the rotor can lead to blade damage. Especially, when these oscillations are linked to blade or rotor resonance modes. In case of resonance, the blade loads can exceed their capacity leading to damage. This damage then needs to be repaired which is expensive and adds time delays. The frequency range of the oscillations (supported by embodiments of the present invention) typically is from 0 Hz to about 20 Hz.

The mentioned oscillations may occur in both production, where power is extracted from the rotor, and in the motoring mode, where the generator is used as a motor to rotate the hub. This motoring mode may be applied for service operations, such as helicopter approach, vessel approach, blade mounting, etc.

During the motoring mode (for example service operation), the generator system may be required to apply or generate a relatively large torque to the rotor to move the unbalanced motor into the predetermined azimuthal position. At such a high torque level, the stability of the electrical system is harder to obtain compared to an operation at low torque levels. But at any torque level (one, two or three blades mounted) there may be a potential risk of instability that the blades need to be protected against.

Embodiments of the present invention enable protection of blades also in case of an electrical oscillation danger or scenario. Embodiments of the present invention monitor oscillations in the electrical system which may be the source of an instability. By looking at the source, an instability may be identified earlier and may allow to take preventive actions before reaching any critical load levels on the blade or other components. Monitoring the electrical oscillation may also be referred to as electrical oscillation monitoring.

The electrical oscillation monitoring may prevent the turbine from reaching critical oscillations in active power or DC-link voltage by monitoring frequency ranges as set by one or more different strings. Should the oscillation amplitude for any string (i.e., frequency region) exceed a certain threshold for a short period of time, an alarm may be set and the converter may be disconnected. Thereby, the alarm may have different activation thresholds for operation (power production) and motoring mode (for example for blade installation, or torque reference motor mode).

According to an embodiment of the present invention, the operational parameter value indicates a critical situation, if an estimated amplitude of the electrical oscillation for one or more of different frequency ranges is above one or more (frequency dependent) amplitude thresholds, in particular for one or more time spans.

The frequency ranges may be selected for example or in particular to cover or overlap with resonance frequencies of oscillation modes of different components of the wind turbines, in particular resonance modes or oscillation modes of the wind turbine blades. Thresholds may be set for the different frequency ranges, thereby enabling flexibility for adaptation the method to the particular constructional details.

It should be understood, that features, individually or in any combination, disclosed, described, applied or employed for a method of operating a generator system, may, individually or in any combination, also applied to an arrangement for operating a generator system according to embodiments of the present invention and vice versa.

According to an embodiment of the present invention, it is provided an arrangement for operating a generator system coupled to a rotor, in particular of a wind turbine, in relation to a motoring mode, comprising: an input port adapted to receive a monitored value of at least one, in particular electrical and/or mechanical, operational parameter of the generator system during the motoring mode; a control module adapted: to generate a ramping down value of a quantity indicating a magnitude of a torque to be generated by the generator system, if the operational parameter value indicates a critical situation, to supply the ramping down value of the quantity to the generator system for controlling the generator system; then to cause stopping the generator system such that no torque is generated by the generator system, wherein the arrangement is in particular adapted to carry out or control a method according to one of the preceding embodiments.

The arrangement may for example be configured to carry out a method according to one of the precedingly described embodiments. The method may for example be partially implemented by the arrangement. The arrangement may be a portion or a module of a wind turbine controller or a wind park controller.

According to an embodiment of the present invention it is provided a wind turbine comprising a generator system and an arrangement according to the preceding embodiment. The generator system may comprise a generator and a converter coupled to the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention including an arrangement for operating a generator system according to an embodiment of the present invention;
Fig. 2 schematically illustrates a wind turbine according to an embodiment of the present invention during a motoring mode;
Fig. 3 illustrates examples of the torque to be generated by the generator system according to embodiments of the present invention;
Fig. 4 illustrates further examples of the torque/power/current to be generated or consumed by the generator system according to embodiments of the present invention;
Fig. 5 illustrates examples of frequency dependent thresholds applied according to an embodiment of the present invention;
Fig. 6 schematically illustrates a monitoring system which may be included in an arrangement according to an embodiment of the present invention;
Fig. 7 schematically illustrates a monitoring system which may be included in an arrangement according to an embodiment of the present invention;
Fig. 8 illustrates a portion of a method scheme according to a method according to an embodiment of the present invention;
Fig. 9 schematically illustrates a monitoring system which may be included in an arrangement according to an embodiment of the present invention;
Fig. 10 schematically illustrates a monitoring unit according to an embodiment of the present invention which may for example be included in the arrangement illustrated in Fig. 1.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

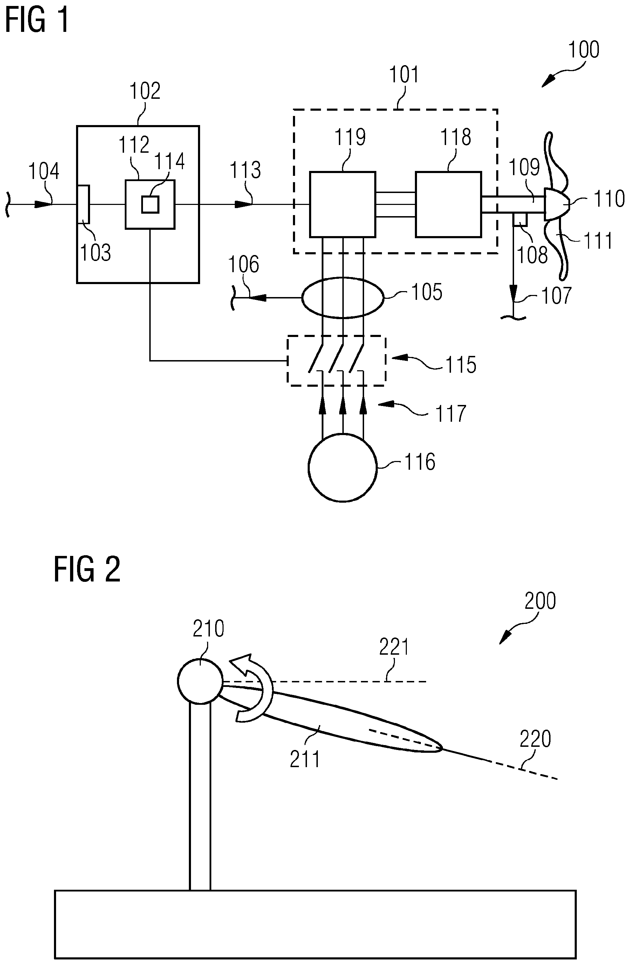

The wind turbine 100 schematically illustrated in Fig. 1 comprises a generator system 101 and an arrangement 102 for operating the generator system 101 according to an embodiment of the present invention. The arrangement 102 comprises an input port 103 which is adapted to receive a monitored value 104 of at least one operational parameter of the generator system 101 during the motoring mode. The operational parameter 104 may for example be the electrical power or electrical current received by the generator system 101, wherein the electrical power is measured by a measurement sensor 105 providing a measurement value 106 which may be one example of the operational parameter value 104 received by the arrangement 102. Alternatively or additionally, the value 104 of the operational parameter may be represented for example by a value 107 of a rotational speed as measured by a speed sensor or speed determination system 108 measuring the rotational speed of a rotor 109 of the wind turbine which is coupled to a hub 110 at which plural rotor blades 111 are mountable.

During the motoring mode, a service operation may be performed on the wind turbine. In this situation, none, one or several rotor blades 111 may be mounted at the hub 110. In one embodiment, the value 104 of the operational parameter may be defined for example as the rotational speed measurement value 107. Embodiments of the present invention may allow that the value 104 of the operational parameter comprises several values of several operational parameters in combination. All the values of the operational parameters may be monitored according to embodiments of the present invention and considered for the control of the generator system 101.

The arrangement 102 further comprises a control module 112 which is adapted to generate a ramping down value 113 of a quantity indicating a magnitude of a torque to be generated by the generator system 101, if the operational parameter value 104 indicates a critical situation.

Whether the value of the operational parameter 104 indicates a critical situation may for example be determined by a monitoring module 114 which may be part of the arrangement 102, in particular may be part of the control module 112.

The control module 112 is adapted to supply the ramping down value 113 to the generator system 101 for controlling the generator system 101.

The control module 112 or in general the arrangement 102 is also adapted to cause disconnecting the generator system from a power supply or/and for stopping the generator system such that no torque is generated by the generator system 101. In the embodiment illustrated in Fig. 1, the arrangement 102 and in particular the control module 112 controls plural switches 115 allowing the generator system 101 to be connected or to be disconnected from a utility grid 116. To the utility grid 116 during a normal energy or power producing mode, power is provided from the generator system 101 operating in a generator mode. In a motoring mode, however, the generator system 101 receives power 117 from the utility grid 116.

After having ramped down the torque as generated by the generator 101 (by supplying the ramping down value 113 indicating the torque to be generated), the switches 115 may be opened by the control module 112 or in general by the arrangement 102.

The arrangement 102 is adapted to carry out a method of operating a generator system according to an embodiment of the present invention.

The quantity 113 indicating the (magnitude of the) torque to be generated by the generator system 101 may for example be or comprise a (magnitude of) a reference torque, a reference current and/or a reference power for the generator system 101. In the embodiment as illustrated in Fig. 1, the generator system 101 comprises a generator 118 and a converter 119 which are connected to each other via three conductors for carrying three-phase power. Stopping and/or disconnecting the converter from the power supply or disconnecting or stopping the generator system 101 may involve to stop and/or disconnect the converter 119 from the power supply 116, for example by opening the switches 115.

**Fig. 2** schematically illustrates a wind turbine 200 according to an embodiment of the present invention during a service procedure in which the generator system is operated in a motoring mode. In the situation illustrated in Fig. 2, the motoring mode is applied in order to rotate the rotor blade 211 such that its longitudinal axis 220 is brought into a substantially horizontal orientation 221. Thereby, generation of a mechanical torque by the generator system is required. During such a service or maintenance operation or assembly or mounting operation or demounting operation, one or more critical situations may occur which may be detected according to embodiments of the present invention followed by subsequent control of the generator system in order to avoid damage.

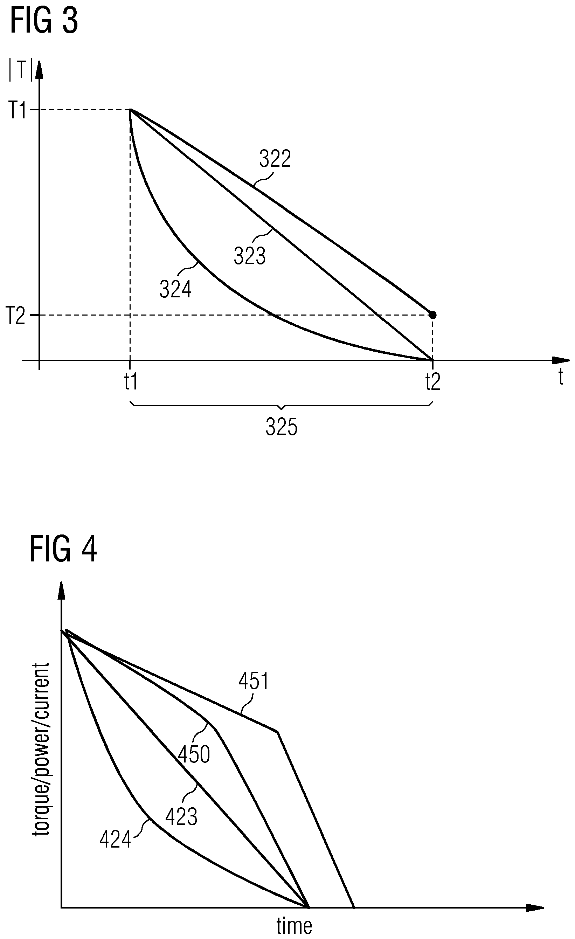

**Fig. 3** illustrates in a coordinate system having as an abscissa the time and having as an ordinate the torque to be generated by the generator system, examples of ramping down values of a quantity indicating a torque to be generated. The curves are labelled with reference signs 322, 323, 324. At a first point in time t1 (for example detection point in time where the operational parameter value indicates a critical situation), the torque generated by the generator system has a first value T1. Beyond the detection point in time t1, the arrangement 102 generates the ramped down value 113, examples of the time behaviour are indicated by the curves 322, 323, 324. The ramping down is performed within a ramping down time interval 325 which may be for example between 100 ms and 300 ms. The ramping down time interval 325 reaches from the detection point in time t1 to a second point in time t2.

According to the curve 322, the torque value changes from the value T1 at the first point in time t1 to the lower value T2 at the second point in time t2 in a linear fashion. Hereby, the torque T2 is above zero. It should be noted that the graphs illustrated in Fig. 3 illustrates the magnitude of the torque. Thus, for all the example curves 322, 323, 324, the magnitude of the torque to be generated decreases over time. According to the example curve labelled with reference sign 323, the torque to be generated is decreased in the ramping down time interval from the value T1 to the value 0 in a linear fashion. According to the still further example curve 324, the torque to be generated is decreased from the value T1 to zero according to a convex function or curve. Other embodiments may allow the ramping down of the torque to be generated according to a still different curve, for example a curve having multiple linear sections or curved nonlinear sections or a combination thereof.

**Fig. 4** illustrates in a coordinate system, having as an abscissa the time and having as an ordinate a torque indicating quantity, example curves 423, 424, 450, 451. The curves 423, 424, 450, 451 are examples of ramping down values of a torque to be generated by or the power consumed by or the current supplied to the generator system. Curve 423 is linear, curve 424 is concave, curve 450 is convex, curve 451 has two linear sections.

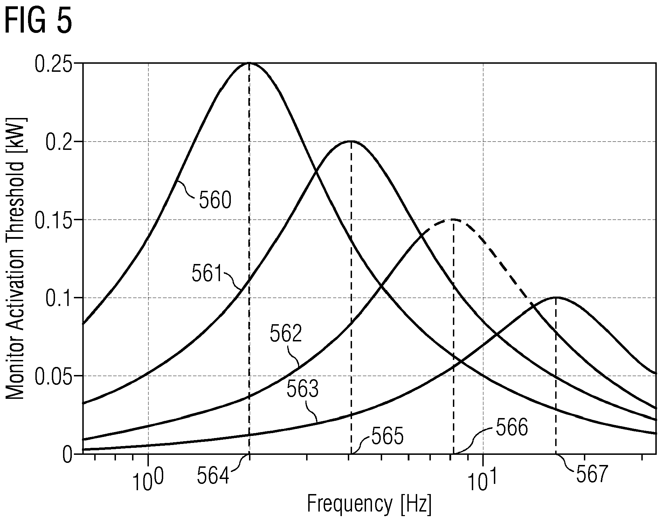

**Fig. 5** illustrates (in a coordinate system having abscissa indicating frequency and ordinate indicating the threshold) examples of frequency dependent thresholds according to curves 560, 561, 562, 563 applied according to an embodiment of the present invention.

A monitored operational parameter may e.g. comprise at least one electrical oscillation of power (consumption) and/or electrical oscillation of a DC-link voltage. The operational parameter value indicates a critical situation, if an estimated amplitude of the electrical oscillation for one or more of different frequency ranges is above one or more frequency dependent amplitude thresholds according to e.g. curves 560, 561, 562, 563.

The curves 560, 561, 562, 563 have decreasing peak values at increasing frequencies 564, 565, 566, 567. Thereby, e.g. the higher the frequency the lower the value of the monitored operational parameter needs to be in order to stop the generator system.

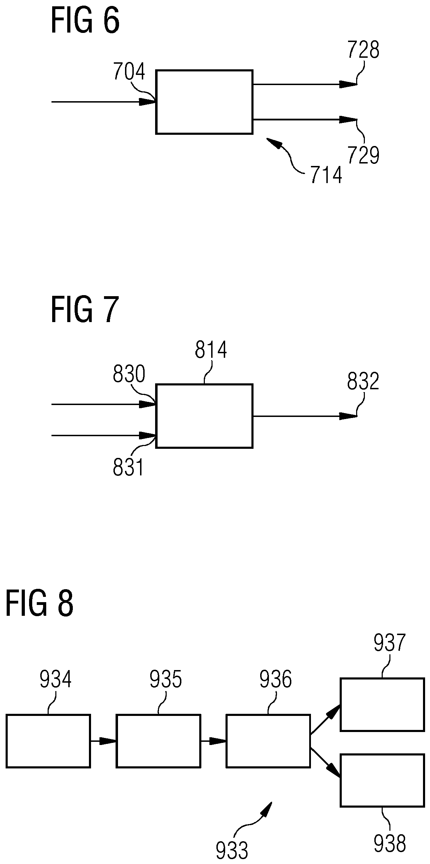

**Fig. 6** illustrates in a schematic manner a monitoring unit 714 which may for example be comprised within the control module 112 of the arrangement 102 illustrated in Fig. 1. The monitoring unit 714 is configured as a power consumption monitor which receives (as one example of an operational parameter) the power 704 consumed by the generator system (for example generator system 101 illustrated in Fig. 1). Alternatively, the power consumption monitor 714 may receive a value for the torque or a value for the current consumed by the generator system.

The power consumption monitor 714 measures the time over which the power consumption 704 is above a threshold and outputs in this relation an indicator 728. Furthermore, the power consumption monitor 714 provides an alarm 729 to cut out the converter if the received power consumption value 704 indicates a critical situation, for example being above a threshold for longer than a threshold time interval. Thereby, the overload monitor 714 detects the overloading by looking at the consumed power used for the positioning control which is supplied to the generator system. When this processed signal is above a predetermined consumption threshold for a short period of time, the electrical system is disconnected to prevent further damage.

**Fig. 7** schematically illustrates a motoring overspeed monitor unit 814 which may for example be included in the arrangement 102 as an example of the monitoring unit 114. The motoring overspeed monitor 814 receives a Boolean signal 830 indicating the monitoring operation. Further, the motoring overspeed monitor 814 receives a one second averaged rotor speed 831. The motoring overspeed monitor 814 processes the received values and outputs a signal 832 indicating an alarm to cut out the converter.

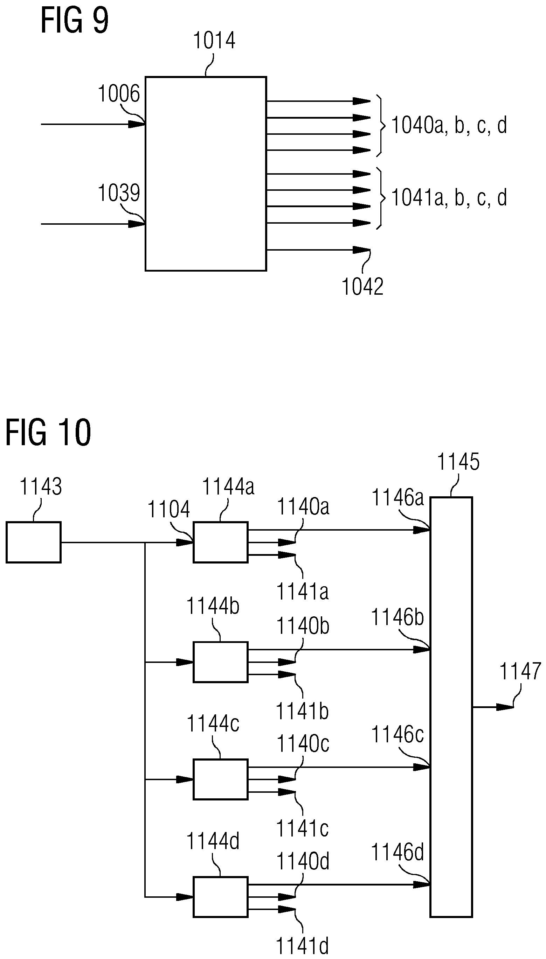

The **Fig. 8** schematically illustrates method scheme 933 or a logic according to which the overspeed monitor 814 operates during the motoring operation. The method scheme 933 includes a block 934 in which the generator is used as a motor to position the turbine rotor. In a next step or method block 935, the overspeed monitor adjusts its threshold to the monitoring operation and monitors the rotational speed. In a next method block 936 it is checked whether the speed exceeds a threshold during the motoring and the monitor disconnects the converter. In the subsequent method block 937 it is indicated that with the converter disconnected, there is nothing to hold the rotor in place, therefore the rotor rotates freely towards the position of balance. In the method block 938 it is indicated that with the converter disconnected, the converter controller cannot suddenly regain control and therefore cannot damage the blade(s). Therefore, blade damage is avoided. The threshold may for example be in the range of 0.2 rpm. **Fig.** 9 illustrates in a schematic manner an electrical oscillation monitor 1014 which may for example be present in the arrangement 102 as the operational parameter monitor 114. The electrical oscillation monitor receives a value 1006 of the power supplied to the generator system. The monitor 1014 further receives the DC-link voltage value 1039 which is a quantity characterising the electrical state of the converter 119 (see Fig. 1). In particular, the converter 119 may comprise an AC/DC-portion, a DC-link and a DC-AC portion. DC-link voltage value 1039 represents the voltage across the DC-link comprised in the converter 119.

The electrical oscillation monitor 1014 estimates from the power value 1006 and/or from the DC-link voltage value 1039 an amplitude of at least one electrical oscillation or one or more of different frequency ranges, wherein the different estimated amplitudes are labelled with reference signs 1040a,b,c,d. Further, the electrical oscillation monitor 1014 determines the time 1041a,b,c,d above which the particular amplitudes in the different frequency ranges are above a threshold and provides respective output signals 1041a,b,c,d. Further, the monitor 1014 outputs a signal 1042 indicating an alarm to cut out the converter. Each of the output signals 1040a,b,c,d and 1041a,b,c,d, respectively, relates to a particular frequency range of oscillations detected within the power 1006 and/or the DC-link voltage 1039. The electrical oscillations are selectively determined from the power input 1006 or the DC-link voltage input 1039.

Fig. 10 schematically illustrates the oscillation amplitude calculation as is applied by the electrical oscillation monitor 1014 illustrated in Fig. 10. An input selector 1143 selects either the power or the DC-link voltage. A first oscillation analysis module 1144a analyses the received input signal within a first frequency range and outputs the corresponding estimated amplitude and the time above a threshold 1141a. Other analysis modules 1144b,c,d analyse the received parameter value 1104 (either power or DC-link voltage) in other frequency ranges and those analysis modules output respective amplitude and thresholds 1140a,b,c,d 1141a,b,c,d respectively. A logical OR- element 1145 performs a logic or-operation on the activation outputs 1146a,b,c,d output by the analysis modules 1144a,b,c,d and finally outputs a signal 1147 indicating an alarm to cut out the converter.

The following explanation is for the first frequency range handled by the first analysis module 1144a: An accumulated time above a threshold variable starts at 0. The string amplitude is compared to the threshold set by the parameter. When the threshold is exceeded, the time variable increases and it decreases otherwise (to minimum zero). When the time above threshold variable is greater than a time threshold set by the parameter, then an alarm is activated and the converter is disconnected.

Converter trips can be disallowed under certain conditions, for example during rotor lock-pin insertion and removal.

According to the embodiment illustrated in Fig. 11 a source of damaging oscillations is monitored, not the mechanical rotor speed oscillations. Monitoring the source of the damaging oscillations may accelerate to react upon occurrence of critical situations. Electrical oscillation monitor may be more effective in detection of unstable behaviour from the electrical system. Looking at power oscillations, it can be captured earlier when oscillations in the converter occur and also preventive actions can be taken before any damage is happening on the rotor or rotor blades.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of operating a generator system (101) coupled to a rotor (109), in particular of a wind turbine (100), in relation to a motoring mode, comprising:
monitoring a value of at least one, in particular electrical and/or mechanical, operational parameter (104) of the generator system (101) during the motoring mode;
ramping down a value of a quantity (113) indicating a magnitude of a torque (T) to be generated by the generator system (101), if the operational parameter value indicates a critical situation, the ramping down value of quantity being supplied to the generator system (101) for controlling the generator system; then
stopping the generator system (101) such that no torque (T) is generated by the generator system, the stopping in particular comprising stopping a converter and/or stopping dynamic control and/or disconnecting the generator system from a power supply.

2. Method according to the preceding claim, wherein the value of the quantity is decreased from a first value (T1) to a second value (T2), wherein the first value is a value generated by the generator system at a detection point in time (t1), when the operational parameter value indicates a critical situation, and the second value (T2) is below a torque indicating threshold value, in particular is zero,
wherein disconnecting the generator system from the power supply is in particular only performed, if the value of the quantity is at the second value (T2).

3. Method according to the preceding claim, wherein the ramping down is performed within a ramping down time interval (325) ranging from a detection point in time (t1), when the operational parameter value indicates a critical situation, until the value of the quantity is ramped down to the second value (T2), wherein the ramping down time interval (325) is between 100 ms and 300 ms, in particular between 150 ms and 250 ms, in particular 200 ms.

4. Method according to one of the preceding claims, wherein the ramping down is performed in one or more time intervals, at least in one time interval in a linear manner.

5. Method according to one of the preceding claims, wherein the quantity (113) indicating a magnitude of a torque comprises one of:
a reference torque for the generator system;
a reference current for the generator system;
a reference power for the generator system.

6. Method according to one of the preceding claims, wherein the generator system (101) comprises a generator (118) and a converter (119) connected to each other, the converter in particular comprising an AC/DC portion, a DC-link and a DC/AC portion,
wherein disconnecting the generator system from the power supply comprises, in particular by operating one or more breakers:
stopping and/or disconnecting the converter (119) from the power supply; and/or
stopping and/or disconnecting the converter (119) from the generator (118).

7. Method according to one of the preceding claims,
wherein during the motoring mode a position control a torque control and/or a current control, in particular using a converter, is performed, and/or
wherein the motoring mode is performed during maintenance and/or assembly and/or installation of one or more components of the wind turbine;
wherein generator system disconnection is disabled during rotor lock pin handling, in particular rotor lock pin insertion or rotor lock pin removal.

8. Method according to one of the preceding claims, wherein the critical situation is indicated, if the operational parameter value (104) and/or a filtered operational parameter value and/or the operational parameter value averaged over a predetermined time span, in particular between 0.5 s and 2 s, in particular 1 s, exceeds or falls below one or more thresholds for one or more time spans.

9. Method according to one of the preceding claims, wherein the power supply comprises at least one of:
a local power supply, in particular combustion engine generator;
a utility grid (116).

10. Method according to one of the preceding claims, wherein the monitored operational parameter (104) comprises at least one of:
power consumption (704) of the generator system (101);
current consumption of the generator system;
torque generated by the generator system;
wherein the operational parameter value indicates in particular a critical situation, if the power consumption and/or current consumption and/or torque generated exceeds in magnitude a predefined profile or predefined value,
the predefined profile being in particular dependent on a mass imbalance of the rotor combined with the rotor position and/or the rotational speed,
wherein the predefined value is in particular a value expected not to be exceeded for a maintenance operation, in particular mounting or demounting of a rotor blade.

11. Method according to one of the preceding claims, wherein the monitored operational parameter (104) comprises at least one of:
rotational speed (831) of a rotor of the generator system;
wherein the operational parameter value indicates in particular a critical situation, if a rotational speed and/or a rotational speed average of an averaging time span, in particular between 0.5 s and 2.0 s, is above a predefined value, in particular 0.2 rpm.

12. Method according to one of the preceding claims, wherein the monitored operational parameter (104) comprises at least one electrical oscillation (1006) of power (consumption) and/or electrical oscillation (1039) of a DC-link voltage, in particular in a frequency range between 0 Hz to 30 Hz, in particular 0.3 Hz to 20 Hz.

13. Method according to the preceding claim, wherein the operational parameter value (104) indicates a critical situation, if an estimated amplitude of the electrical oscillation for one or more of different frequency ranges is above one or more frequency dependent amplitude thresholds, in particular for one or more time spans.

14. Arrangement (102) for operating a generator system (101) coupled to a rotor, in particular of a wind turbine, in relation to a motoring mode, comprising:
an input port (103) adapted to receive a monitored value of at least one, in particular electrical and/or mechanical, operational parameter (104) of the generator system (101) during the motoring mode;
a control module (112) adapted:
to generate a ramping down value of a quantity (113) indicating a magnitude of a torque to be generated by the generator system, if the operational parameter value indicates a critical situation,
to supply the ramping down value (113) of the quantity to the generator system (101) for controlling the generator system; then
to cause stopping the generator system (101) such that no torque is generated by the generator system,
wherein the arrangement is in particular adapted to carry out or control a method according to one of the preceding claims.

15. Wind turbine (100), comprising:
a generator system (101);
an arrangement (102) according to the preceding claim.
